# EUROPEAN PATENT APPLICATION

(11) **EP 4 737 309 A1**
(43) Date of publication of application: **06.05.2026**
(21) Application number: 25212045.6
(22) Date of filing: 29.10.2025
(51) Int. Cl.: B64C 11/00, B64C 1/40, F01D 5/16, B64C 21/02, B64C 11/26

(54) **SWIRL RECOVERY VANE WITH ACOUSTIC TREATMENT, GAS TURBINE ENGINE AND PROCESS FOR FORMING A SWIRL RECOVERY VANE**

(30) Priority: 31.10.2024 US 202418933563
(71) Applicant: RTX Corporation, Farmington, CT 06032 (US)
(72) Inventor: Yazici, Murat, Glastonbury, 06033 (US); Breault, Andrew E., Bolton, 06043 (US); Morton, Jeffrey T., Glastonbury, 06033 (US)
(74) Representative: Schmitt-Nilson Schraud Waibel Wohlfrom Patentanwälte Partnerschaft mbB

(57) **Abstract**

A swirl recovery vane with acoustic treatment includes a leading edge and a trailing edge opposite chordwise from the leading edge; an attachment region opposite spanwise from a tip region; a span dimension extending between the attachment region and the tip region; a chord dimension extending between the leading edge and the trailing edge; a pressure side opposite a suction side of the swirl recovery vane; an acoustic panel receiver formed within the swirl recovery vane extending at least one of spanwise through the swirl recovery vane between the attachment region and the tip region or chordwise between the leading edge and the trailing edge; and an acoustic panel inserted into the acoustic panel receiver. A gas turbine engine includes the swirl recovery vane with acoustic treatment. A process forms the swirl recovery vane with acoustic treatment.

## Description

The present disclosure is directed to the improved interchangeable acoustic strips and panels for a swirl recovery vane structure.

The swirl recovery vane pattern is defined to meet structural, performance and acoustic requirements across a wide range of operating conditions. Engine noise is challenging for open rotor architectures. Engine and airframe makers are looking for more opportunities for noise reduction. At the engine side, acoustic treatable areas are limited. Swirl recovery vanes are an area for noise reduction opportunities.

In accordance with the present disclosure, there is provided a swirl recovery vane with acoustic treatment comprising a leading edge and a trailing edge opposite chordwise from the leading edge; an attachment region opposite spanwise from a tip region; a span dimension extending between the attachment region and the tip region; a chord dimension extending between the leading edge and the trailing edge; a pressure side opposite a suction side of the swirl recovery vane; an acoustic panel receiver formed within the swirl recovery vane extending at least one of spanwise through the swirl recovery vane between the attachment region and the tip region or chordwise between the leading edge and the trailing edge; and an acoustic panel inserted into the acoustic panel receiver.

Particular embodiments further may include at least one, or a plurality of, the following optional features, alone or in combination with each other:

A further embodiment of any of the foregoing embodiments may additionally and/or alternatively include the acoustic panel receiver is formed in the swirl recovery vane at predetermined locations along the span of the swirl recovery vane.

A further embodiment of any of the foregoing embodiments may additionally and/or alternatively include the acoustic panel receiver is located on the pressure side of the swirl recovery vane.

A further embodiment of any of the foregoing embodiments may additionally and/or alternatively include the acoustic panel receiver comprises at least one of a rectangular cross section, an oval cross section, or a tee shaped cross section.

A further embodiment of any of the foregoing embodiments may additionally and/or alternatively include the swirl recovery vane with acoustic treatment further comprising the acoustic treatment formed within the acoustic panel, the acoustic treatment configured to dissipate sound energy.

A further embodiment of any of the foregoing embodiments may additionally and/or alternatively include the acoustic panel is configured slidable into the acoustic panel receiver.

A further embodiment of any of the foregoing embodiments may additionally and/or alternatively include the acoustic panel is configured interchangeable to accommodate design changes and/or damage to the acoustic panel.

In accordance with the present disclosure, there is provided a gas turbine engine with a swirl recovery vane with acoustic treatment comprising a propulsor rotor located within an open environment; an array of swirl recovery vanes downstream from the propulsor rotor, the array of swirl recovery vanes attached to a nacelle flow surface; wherein each swirl recovery vane of the array of swirl recovery vanes comprises a leading edge and a trailing edge opposite chordwise from the leading edge; an attachment region opposite spanwise from a tip region; a span dimension extending between the attachment region and the tip region; a chord dimension extending between the leading edge and the trailing edge; a pressure side opposite a suction side of the swirl recovery vane; an acoustic panel receiver formed within the swirl recovery vane at least one of spanwise through the swirl recovery vane between the attachment region and the tip region or chordwise between the leading edge and the trailing edge; and an acoustic panel inserted into the acoustic panel receiver.

Particular embodiments further may include at least one, or a plurality of, the following optional features, alone or in combination with each other:

A further embodiment of any of the foregoing embodiments may additionally and/or alternatively include the acoustic panel receiver is one of at least two acoustic panel receivers formed in the swirl recovery vane at predetermined locations along the span of the swirl recovery vane.

A further embodiment of any of the foregoing embodiments may additionally and/or alternatively include the gas turbine engine with a swirl recovery vane with acoustic treatment further comprising the acoustic treatment formed within the acoustic panel, the acoustic treatment configured to dissipate sound energy.

A further embodiment of any of the foregoing embodiments may additionally and/or alternatively include the acoustic panel receiver is located on the pressure side of the swirl recovery vane.

A further embodiment of any of the foregoing embodiments may additionally and/or alternatively include the acoustic panel receiver comprises at least one of a rectangular cross section, an oval cross section, a tee shaped cross section.

A further embodiment of any of the foregoing embodiments may additionally and/or alternatively include the acoustic panel is configured slidable into the acoustic panel receiver.

In accordance with the present disclosure, there is provided a process for a swirl recovery vane with acoustic treatment comprising locating a propulsor rotor in an open environment; supporting an array of swirl recovery vanes downstream from the propulsor rotor; attaching the array of swirl recovery vanes to a nacelle flow surface by coupling an attachment region of a swirl recovery vane of the array of swirl recovery vanes in operative communication with the nacelle flow surface; forming an acoustic panel receiver within the swirl recovery vane extending at least one of spanwise through the swirl recovery vane between the attachment region and the tip region or chordwise between a leading edge and a trailing edge of the swirl recovery vane; and inserting an acoustic panel into the acoustic panel receiver.

Particular embodiments further may include at least one, or a plurality of, the following optional features, alone or in combination with each other:

A further embodiment of any of the foregoing embodiments may additionally and/or alternatively include the process further comprising forming the acoustic panel receiver in the swirl recovery vane at predetermined locations along the span of the swirl recovery vane.

A further embodiment of any of the foregoing embodiments may additionally and/or alternatively include the process further comprising forming the acoustic treatment within the acoustic panel; and configuring the acoustic treatment to dissipate sound energy.

A further embodiment of any of the foregoing embodiments may additionally and/or alternatively include the process further comprising locating the acoustic panel receiver on the pressure side of the swirl recovery vane.

A further embodiment of any of the foregoing embodiments may additionally and/or alternatively include the process further comprising configuring the acoustic panel slidable into the acoustic panel receiver.

A further embodiment of any of the foregoing embodiments may additionally and/or alternatively include the process further comprising configuring the acoustic panel interchangeable to accommodate design changes and/or damage to the acoustic panel.

A further embodiment of any of the foregoing embodiments may additionally and/or alternatively include the process further comprising shaping the acoustic panel to influence acoustic dampening capability in the proximity of the swirl recovery vane.

Other details of the interchangeable acoustic strips and panels for swirl recovery vane structure are set forth in the following detailed description and the accompanying drawings wherein like reference numerals depict like elements.
Fig. 1 is a schematic representation of a gas turbine engine with an unducted rotor exposed to an open environment.
Fig. 2 is a sectional view of schematic representation of the exemplary swirl recovery vane with acoustic treatment.
Fig. 3 is a schematic representation of exemplary swirl recovery vanes with acoustic treatment.

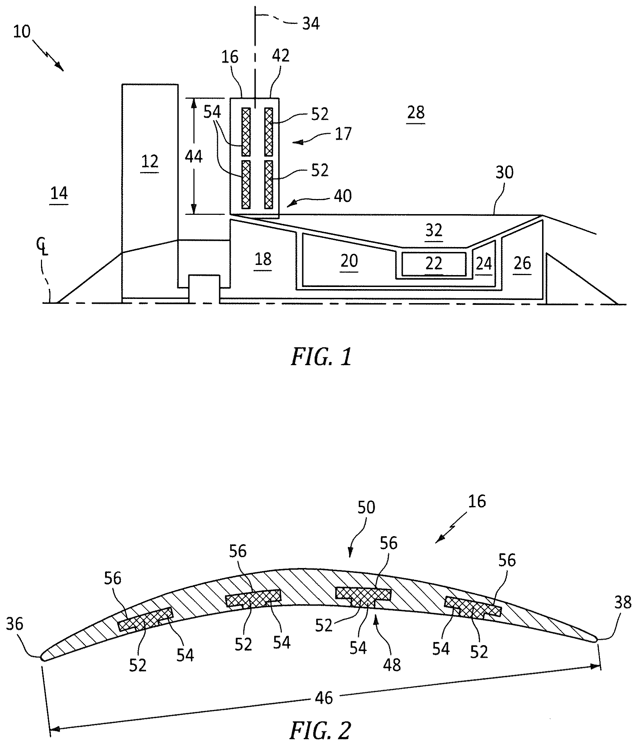

Referring now to Fig. 1 showing a schematic of a gas turbine engine 10. The gas turbine engine 10 includes a propulsor rotor 12 proximate an engine inlet 14. An open rotor core gas generator inlet may be as shown or reversed as in a reverse flow configuration (e.g., inlet for the core located at a downstream end of the gas turbine engine 10 to support a reverse core). Though not depicted as an inlet for air entering the core, one skilled in the art understands that an engine inlet enables a flow of core air into the gas turbine engine 10. Downstream from the propulsor rotor 12 is a swirl recovery vane 16. The gas turbine engine 10 can be an open rotor engine centered about centerline CL. The swirl recovery vanes 16 can be arranged as an array 17 configured about the centerline CL or another centerline. The gas turbine engine 10 includes sections listed from forward toward aft, such as, a low pressure compressor (LPC) 18, high pressure compressor (HPC) 20, combustor (COMB) 22, high pressure turbine (HPT) 24, and low pressure turbine (LPT) 26. The orientation of sections 18-26 may be arranged in a different orientation from what is shown in Fig. 1, such as in a reverse core orientation (not shown) with a reversed engine inlet 14. An open environment 28 is exterior to a nacelle flow surface 30.

The nacelle flow surface 30 is shown bounding a core compartment 32. The core compartment 32 encloses the above listed gas turbine engine 10 sections. The gas turbine engine 10 can include various propulsion system architectures including a tractor (propulsor rotor and swirl recovery vane at an upstream end of the propulsion system) and a pusher (propulsor rotor and swirl recovery vane at a downstream end of the propulsion system) architectures. In a pusher architecture, the swirl recovery vanes 16 in an optional embodiment may be upstream of the propulsor rotor 12 and may act to pre-swirl the air rather than recover swirl.

The swirl recovery vane 16 extends into the open environment 28. The swirl recovery vane 16 is in operative communication with the nacelle flow surface 30. The swirl recovery vane 16 includes a vane stacking axis 34 that is largely radially aligned with respect to the centerline CL. The swirl recovery vane 16 can be a cantilever supported structure. In an exemplary embodiment, the swirl recovery vane 16 can have a variable pitch.

With reference also to Fig. 2, the swirl recovery vane 16 includes a leading edge 36 and a trailing edge 38 opposite chordwise from the leading edge 36. The swirl recovery vane 16 includes a pressure side 48 and a suction side 50.

The swirl recovery vane 16 includes an attachment region 40 proximate the nacelle flow surface 30. The attachment region 40 of the swirl recovery vane 16 attaches to the nacelle flow surface 30 or a variable pitch mechanism contained within the nacelle flow surface 30 (not shown in the figures). The swirl recovery vane 16 includes a tip region 42 opposite the attachment region 40.

The swirl recovery vane 16 includes a span 44 dimension extending between the attachment region 40 and the tip region 42. The swirl recovery vane 16 includes a chord dimension 46 extending between the leading edge 36 and the trailing edge 38, as seen in Fig 2. The swirl recovery vane 16 can include a pressure side 48 and a suction side 50 opposite the pressure side 48.

The swirl recovery vane 16 shown in Fig 1 is oriented generally vertical, that is along a radial direction, that follows the vane stacking axis 34 relative to the centerline CL axis of the array 17 or can include a canted orientation. In an exemplary embodiment, the vane stacking axis can be canted aft, that is the attachment region 40 is forward of the tip region 42.

The swirl recovery vane 16 can include an acoustic treatment 52. The acoustic treatment 52 can be any material or structure configured to dissipate sound energy. The acoustic treatment 52 can include various materials and/or structures with sound-absorbing and diffusing properties. In an exemplary embodiment the acoustic treatment 52 can provide a broadband noise benefit from about 1 to 5 EPNdB. The acoustic treatment 52 can be varied from one swirl recovery vane 16 to another. The variation can be by varying the materials, the shape and the location of the acoustic treatment 52 on each swirl recovery vane 16 in the array 17. The materials of the acoustic treatment 52 can include, but are not limited to composites, metals, plastics, foams, and the like. The acoustic treatment 52 is porous and/or shaped in a form that includes a plurality of cavities with a high surface area to fill ratio (e.g., many nooks and crannies) to enable the acoustic energy to enter and dissipate within. That is, the acoustic panel 54 can be shaped to influence the acoustic dampening capability thereof. For example, the material may include a honeycomb structure, which enables significant acoustic dampening.

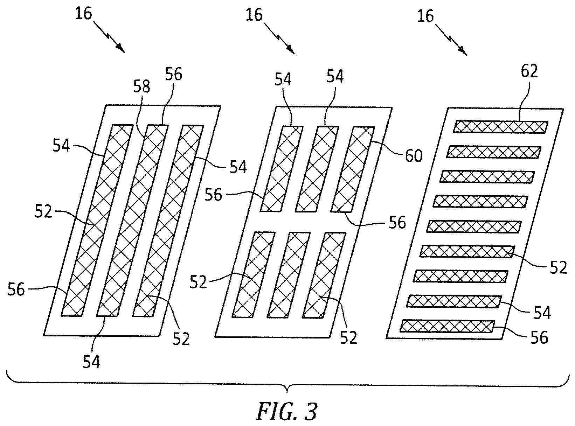

The acoustic treatment 52 can be formed as acoustic panels 54 having the cross section and/or shape configured to be inserted into acoustic panel receivers 56 as seen in cross section at Fig. 2. The acoustic panel receiver 56 can have a cross section and/or shape that allows for securing the acoustic panel 54 as well as allowing for insertion of the acoustic panel 54 into the acoustic panel receiver 56. The acoustic panel receiver 56 can have a rectangular cross section and/or shape, oval cross section and/or shape, tee shaped cross section and/or shape and the like (e.g., different shapes, combinations of shapes, etc.). The acoustic panel receivers 56 can be formed in the swirl recovery vane 16 at predetermined locations along the span 44 of the swirl recovery vane 16 as seen in Fig. 3. The acoustic panel receiver 56 can be formed on the pressure side and/or the suction side of the fan exit guide vane 18. The acoustic panel receiver 56 can be aligned along the span 44 as long sections 58 and/or short sections 60, or combinations thereof. The acoustic panel receiver 56 can be aligned chordwise as chord sections 62 shown in FIG. 3. The terms long section 58 and short section 60 are defined relative to the dimensions of the swirl recovery vane 16, such as long section 58 being more than half the span dimension 44 and short section 60 being less than half the span dimension 44. The chord section 62 dimension is relative to the chord dimension 46 and can vary depending on the swirl recovery vane 16. Though illustrated as being of similar orientations on a single swirl recovery vane 16, this is not intending to be so limiting and a single swirl recovery vane 16 may include one or more long sections 58, one or more short sections 60 and/or one or more chord sections 62.

The acoustic panel 54 can be configured to be inserted into the acoustic panel receivers 56. The acoustic panel 54 is configured to be slidable and insertable as a snap fit or friction fit into the acoustic panel receiver 56. The slidable nature is configured so that the panel 54 would slide in from one end of the receiver 56 (during fabrication of the swirl recovery vane 16) and would be trapped by the geometry of the receiver 56. The acoustic panel 54 can be installed into the acoustic panel receiver 56 from the attachment region 40, and/or tip region 42, leading edge 36 and/or trailing edge 38 and/or mid-span, and the like. The locations of the acoustic panel receivers 56 can be located dependent on the design of the swirl recovery vane 16 final count/aero design, acoustic and attachment structural requirements. The material of the swirl recovery vane 16 between the receivers 56 can form ribs that provide structure. The orientation (axial vs radial) of these structural features and how they layout will be influenced by the characteristics of the specific design of the swirl recovery vane 16.

The acoustic panel 54 can be interchangeable to accommodate design changes and/or damage to the acoustic panel 54. The acoustic panel 54 can be shaped to influence the acoustic capability in the proximity of the swirl recovery vane 16. For example, the acoustic panel 54 can include a physical shape, depth, width, height, or other dimension that influences the acoustic capability thereof. The acoustic panel 54 can be varied from one swirl recovery vane 16 to another. The variation can be by varying the materials, the shape and the location of the acoustic panel 54. Though illustrated in FIG. 3 as having acoustic panels 54 on a single swirl recovery vane 16 of the same shape and/or size, this is not intended to be so limiting and the acoustic panels 54 on a single swirl recovery vane 16 may include the same or different shapes, sizes, and orientations (e.g., one or more oriented chordwise, one or more oriented spanwise). The material, shape, and location of the acoustic panels 54 may also vary between swirl recovery vanes 16.

A technical advantage of the disclosed interchangeable acoustic strips and panels for swirl recovery vane structure includes a capacity to dampen acoustic noise along the surfaces of the swirl recovery vane.

Another technical advantage of the disclosed interchangeable acoustic strips and panels for swirl recovery vane structure includes structural features formed in the swirl recovery vane configured to receive acoustic panels.

Another technical advantage of the disclosed interchangeable acoustic strips and panels for swirl recovery vane structure includes interchangeable panels with acoustic treatment.

Another technical advantage of the disclosed interchangeable acoustic strips and panels for swirl recovery vane structure includes patterns of acoustic panels attached to swirl recovery vane enabling both aero and structural function.

There has been provided an interchangeable acoustic strips and panels for swirl recovery vane structure. While the interchangeable acoustic strips and panels for swirl recovery vane structure has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A swirl recovery vane comprising:
a leading edge and a trailing edge opposite chordwise from the leading edge; an attachment region opposite spanwise from a tip region; a span dimension extending between the attachment region and the tip region; a chord dimension extending between the leading edge and the trailing edge; a pressure side opposite a suction side of the swirl recovery vane;
an acoustic panel receiver formed within the swirl recovery vane extending at least one of spanwise through the swirl recovery vane between the attachment region and the tip region or chordwise between the leading edge and the trailing edge; and
an acoustic panel inserted into the acoustic panel receiver.

2. The swirl recovery vane according to claim 1, wherein the acoustic panel receiver is one of at least two acoustic panel receivers formed in the swirl recovery vane at predetermined locations along the span of the swirl recovery vane.

3. The swirl recovery vane according to claim 1 or 2, wherein the acoustic panel receiver is located on the pressure side.

4. The swirl recovery vane according to any of claims 1 to 3, wherein the acoustic panel receiver comprises at least one of a rectangular cross section, an oval cross section, or a tee shaped cross section.

5. The swirl recovery vane according to any of claims 1 to 4, further comprising:
the acoustic treatment formed within the acoustic panel, the acoustic treatment configured to dissipate sound energy.

6. The swirl recovery vane according to any of claims 1 to 5, wherein the acoustic panel is configured slidable into the acoustic panel receiver.

7. The swirl recovery vane according to any of claims 1 to 6, wherein the acoustic panel is configured interchangeable to accommodate design changes and/or damage to the acoustic panel.

8. A gas turbine engine with a swirl recovery vane with acoustic treatment comprising:
a propulsor rotor located within an open environment; and
an array of swirl recovery vanes downstream from the propulsor rotor, the array of swirl recovery vanes attached to a nacelle flow surface; wherein each swirl recovery vane of the array of swirl recovery vanes comprising a configuration as claimed in any of claims 1 to 7.

9. A process for creating a swirl recovery vane with acoustic treatment comprising:
supporting an array of swirl recovery vanes downstream from a location associated with a propulsor rotor in an open environment;
attaching the array of swirl recovery vanes to a nacelle flow surface by coupling an attachment region of a swirl recovery vane of the array of swirl recovery vanes in operative communication with the nacelle flow surface;
forming an acoustic panel receiver within the swirl recovery vane extending at least one of spanwise through the swirl recovery vane between the attachment region and the tip region or chordwise between a leading edge and a trailing edge of the swirl recovery vane; and
inserting an acoustic panel into the acoustic panel receiver.

10. The process according to claim 9, further comprising:
forming the acoustic panel receiver in the swirl recovery vane at predetermined locations along the span of the swirl recovery vane.

11. The process according to claim 9 or 10, further comprising:
forming the acoustic treatment within the acoustic panel; and
configuring the acoustic treatment to dissipate sound energy.

12. The process according to any of claims 9 to 11, further comprising:
locating the acoustic panel receiver on the pressure side of the swirl recovery vane.

13. The process according to any of claims 9 to 12, further comprising:
configuring the acoustic panel slidable into the acoustic panel receiver.

14. The process according to any of claims 9 to 13, further comprising:
configuring the acoustic panel interchangeable to accommodate design changes and/or damage to the acoustic panel.

15. The process according to any of claims 9 to 14, further comprising:
shaping the acoustic panel to influence acoustic dampening capability in the proximity of the swirl recovery vane.
